# EUROPEAN PATENT APPLICATION

(11) **EP 4 681 848 A1**
(43) Date of publication of application: **21.01.2026**
(21) Application number: 24770520.5
(22) Date of filing: 28.02.2024
(51) Int. Cl.: B23B 13/12, B23B 21/00

(54) **GUIDE BUSH DEVICE**

(30) Priority: 14.03.2023 JP 2023040007
(71) Applicant: Citizen Watch Co., Ltd., Nishitokyo-shi, Tokyo 188-8511 (JP); Citizen Machinery Co., Ltd., Nagano 389-0206 (JP)
(72) Inventor: AOYAGI, Atsushi, Kitasaku-gun, Nagano 389-0206 (JP)
(74) Representative: Louis Pöhlau Lohrentz
(86) International application number: PCT/JP2024/007205
(87) International publication number: WO 2024/190408

(57) **Abstract**

Provided is a guide bush device that is easily applicable to machine tools and that can properly support a workpiece to be machined while it is held by a main spindle. A guide bush device (70) is mounted on a first turret tool post (20) to be at least movable with respect to a main spindle in a Z-axis direction along an axis of the main spindle and in an X-axis direction intersecting the axis. The guide bush device (70) is a rotary guide bush including a guide bush sleeve (72) and a guide bush (73). The guide bush sleeve (72) and the guide bush (73) of the rotary guide bush are controlled to rotate synchronously with rotation of the main spindle to guide a workpiece (W) fed from the main spindle while rotating.

## Description

### [Technical Field]

The present invention relates to a guide bush device.

### [Background Art]

A guide bush device is known in machine tools including a main spindle and a tool turret. The guide bush device is attached to a tool attachment station of the tool turret and includes a plurality of guide bushes with different hole diameters that rotatably hold the outer diameters of a workpiece to be machined (see, for example, Patent Literature 1). Such a machine tool can perform both machining by holding a round bar of the workpiece and machining by holding a needle portion of the workpiece, using a single guide bush device.

Patent Literature 2 discloses a tool-post cutting device including a tool post disposed around a main spindle center line of a lathe, a plurality of guide-bush holding posts disposed around the main spindle center line, and a moving mechanism configured to independently advance and retreat the tool post and each of the guide-bush holding posts relative to the main spindle center line.

Some machine tools do not include a guide bush device. Even in such a device, there has been a demand for developing a technique capable of properly supporting a workpiece during machining while the workpiece is held by the main spindle, particularly when machining a workpiece having a small outer diameter or a long length relative to the outer diameter (short side).

### [Prior Art Documents]

### [Patent Literature]

[Patent Literature 1] Japanese Patent No. 4271402
[Patent Literature 2] Japanese Patent No. 4730831

### [Summary of Invention]

### [Problem to be solved]

The present invention has been made in view of the above-described circumstances and the object of the guide bush device of the present invention is to provide a guide bush device that is easy to apply to a machine tool and capable of properly supporting a workpiece to be machined while the workpiece is held by a main spindle.

### [Solution to Problem]

A guide bush device of the present invention is adapted to be mounted on a tool post of a machine tool. The machine tool includes a main spindle for holding a workpiece and the tool post for machining the workpiece. The guide bush device is configured to be at least movable with respect to the main spindle in a direction along an axis of the main spindle and in a direction intersecting the axis. The guide bush device is a rotary guide bush. The rotary guide bush includes a guide bush sleeve that is rotatably supported, and a guide bush that is inserted in the guide bush sleeve. The rotary guide bush is controlled to rotate synchronously with rotation of the main spindle so as to guide the workpiece held by the main spindle while the rotary guide bush rotates.

### [Effects of Invention]

According to the guide bush device of the present invention, the device can be easily applied to a machine tool not equipped with a guide bush device, and can properly support the workpiece to be machined while the workpiece is held by the main spindle.

### [Brief Description of Drawings]

[FIG. 1] FIG. 1 is a plan view schematically showing a main portion of an automatic lathe including a guide bush device according to one embodiment of the present invention.
[FIG. 2] FIG. 2 is a front view of a first turret tool post viewed from the front in a Z-axis direction of the first turret tool post.
[FIG. 3] FIG. 3 is a sectional view taken along the Z-axis of the first turret tool post.
[FIG. 4] FIG. 4 is a sectional view taken along the Z-axis of the guide bush device.
[FIG. 5] FIG. 5 is a front view of the first turret tool post viewed from the front in the Z-axis direction, when the guide bush device has been indexed by rotation of the first turret tool post.

### [Detailed Description of Embodiments]

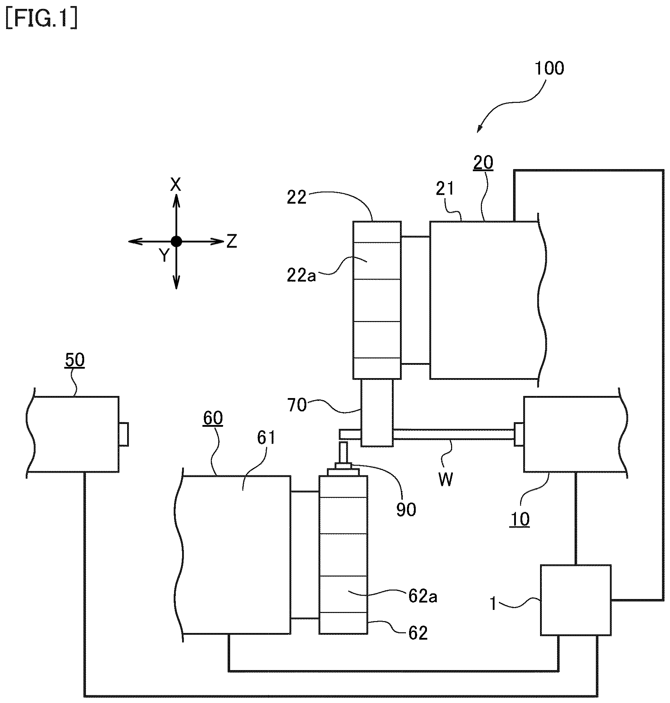

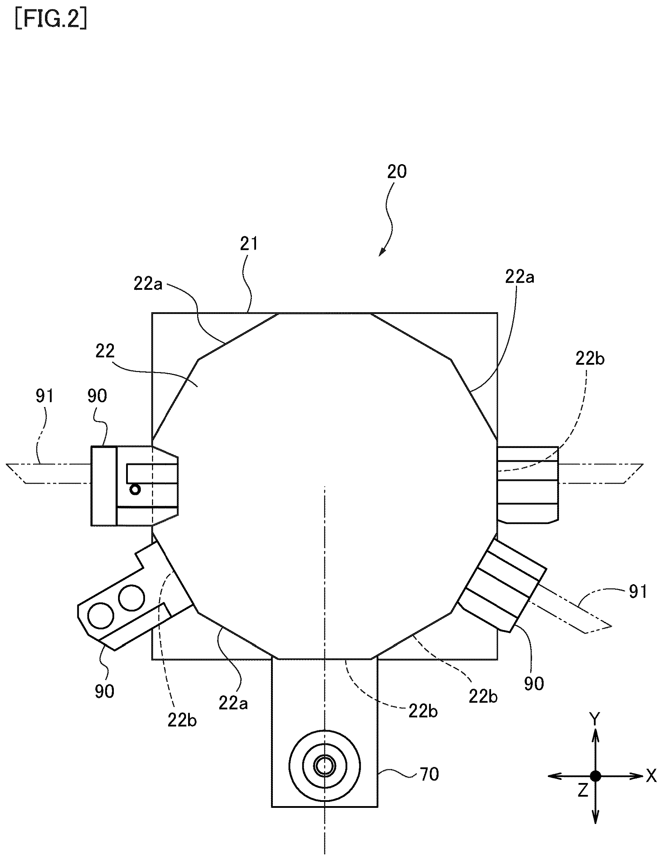

An automatic lathe 100, which is an exemplary machine tool including a guide bush device 70 according to the present invention, will be described below with reference to the drawings. FIG. 1 is a view schematically showing a main portion of the automatic lathe 100 including the guide bush device 70 according to one embodiment of the present invention (see FIG. 2, etc.).

As shown in FIG. 1, the automatic lathe 100 includes a front main spindle 10, a first turret tool post 20, a rear main spindle 50, and a second turret tool post 60, which are installed on a bed (not shown in the drawings). In the present embodiment, the direction along the axes of the front main spindle 10 and the rear main spindle 50 is defined as a Z-axis direction. The horizontal direction perpendicular to the Z-axis direction is defined as an X-axis direction. The vertical direction perpendicular to the Z-axis and X-axis directions is defined as a Y-axis direction. The direction in which the front main spindle 10 feeds a workpiece W toward the first turret tool post 20 is defined as the forward direction, and the opposite direction is defined as the rearward direction.

The automatic lathe 100 includes a controller 1 that is configured to control the overall operation of the automatic lathe 100. The controller 1 is connected to the front main spindle 10, the first turret tool post 20, the rear main spindle 50, the second turret tool post 60, and other components by cables or the like to control the operation of each portion.

The front main spindle 10 includes, at its end, a collet chuck (not shown in the drawings). The collet chuck is configured to hold a bar-shaped workpiece W. The front main spindle 10 is rotatable about the Z-axis along its axis. This makes it possible to rotate the workpiece W held thereby about the axis (Z-axis).

The rear main spindle 50 is disposed at a forward position in the Z-axis direction of the front main spindle 10 (i.e., on a forward side in the Z-axis direction from the front end of the front main spindle 10), so as to face the front main spindle 10. The rear main spindle 50 also includes, at its end, a collet chuck (not shown in the drawings). The collet chuck allows the rear main spindle 50 to receive and hold the workpiece W held by the front main spindle 10.

The rear main spindle 50 is also rotatable about the Z-axis along its axis. This makes it possible to rotate the workpiece W held thereby about the axis (Z-axis). The rear main spindle 50 is movable, for example, in the Z-axis and X-axis directions by a known moving mechanism.

The first turret tool post 20 is disposed at a forward position in the Z-axis direction of the front main spindle 10 (i.e., on a forward side in the Z-axis direction from the front end of the front main spindle 10), in parallel with the front main spindle 10. The first turret tool post 20 is configured to perform machining on the workpiece W, which is held by the front main spindle 10, or on the workpiece W, which is held by the rear main spindle 50, using a predetermined tool. The first turret tool post 20 is configured such that the guide bush device 70 can be detachably attached thereto.

The second turret tool post 60 is disposed at a rearward position in the Z-axis direction of the rear main spindle 50 (i.e., on a rearward side in the Z-axis direction from the front end of the rear main spindle 50), in parallel with the rear main spindle 50. The second turret tool post 60 is configured to perform machining on the workpiece W, which is held by the rear main spindle 50, or on the workpiece W, which is held by the front main spindle 10, using a predetermined tool. The second turret tool post 60 is also configured such that the guide bush device 70 can be detachably attached thereto.

The first turret tool post 20 and the second turret tool post 60 are freely movable in the X-axis and Z-axis directions by a known moving mechanism. In other words, the first turret tool post 20 and the second turret tool post 60 are freely movable in the X-axis and Z-axis directions with respect to the front main spindle 10 and/or the rear main spindle 50.

It suffices that the first turret tool post 20 and the second turret tool post 60 are movable at least in the X-axis and Z-axis directions with respect to the front main spindle 10 and/or the rear main spindle 50. For example, when the front main spindle 10 does not move in the X-axis or Z-axis direction, the first turret tool post 20 moves in the X-axis and/or Z-axis direction. One of the second turret tool post 60 and the rear main spindle 50 may be movable in the X-axis and/or Z-axis direction. Alternatively, both of them may be movable in the X-axis and/or Z-axis direction. The first turret tool post 20 and the second turret tool post 60 may be freely movable in the Y-axis direction by a known moving mechanism with respect to the front main spindle 10 and/or the rear main spindle 50.

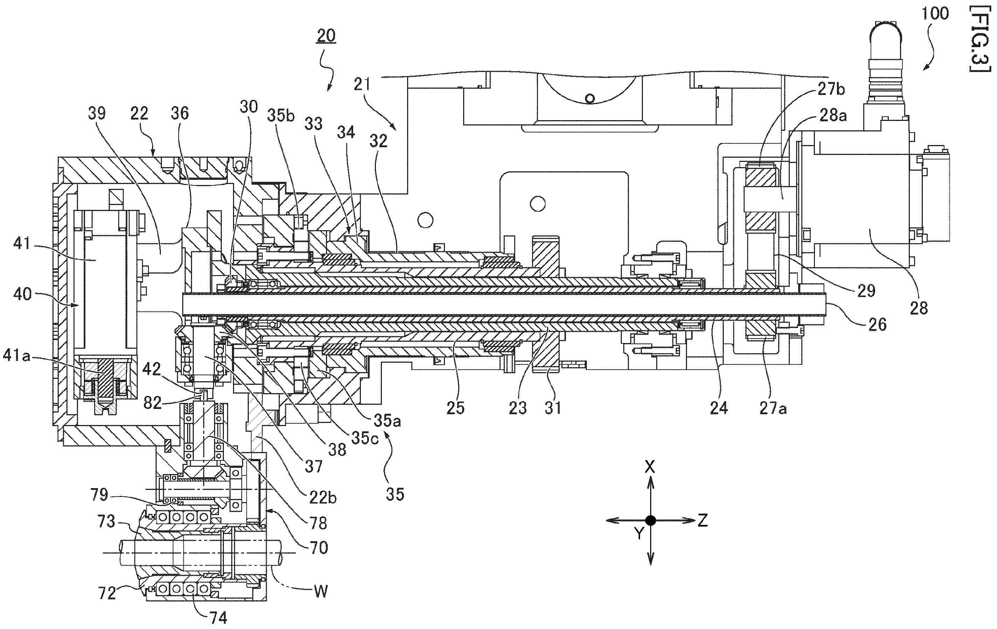

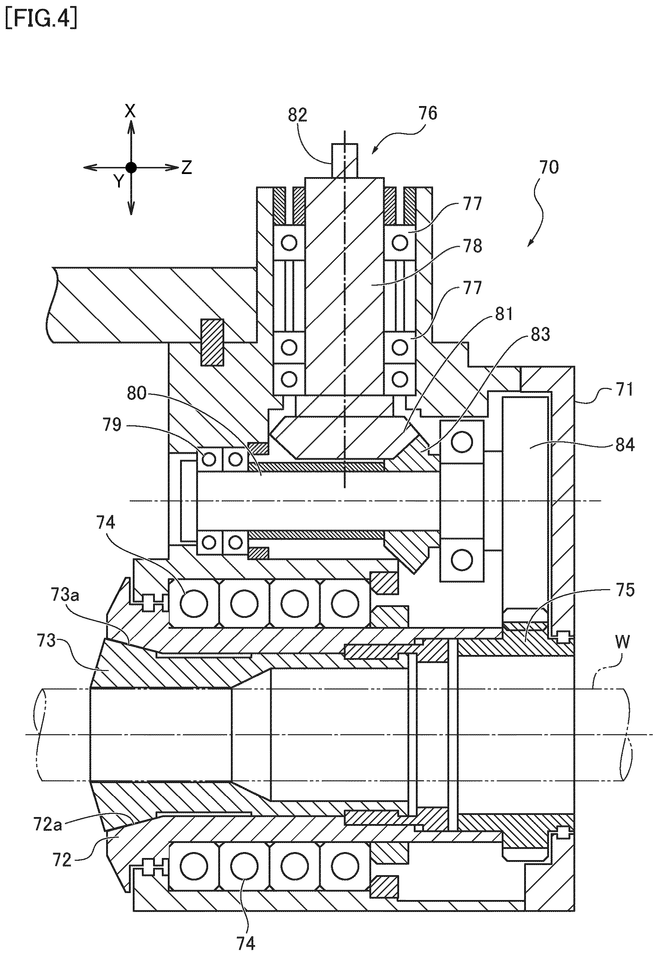

FIG. 2 is a front view of the first turret tool post 20 viewed from the front along the Z-axis direction of the first turret tool post 20. FIG. 3 is a sectional view taken along the Z-axis of the first turret tool post 20. FIG. 4 is a sectional view taken along the Z-axis of the guide bush device 70.

As shown in FIG. 2, the first turret tool post 20 mainly includes a body portion 21, a turret 22 including turret surfaces (attachment surfaces) 22a, and a drive mechanism such as a tool rotation motor 28. The body portion 21 and the turret 22 are aligned with each other in the Z-axis direction. As shown in FIG. 1, the second turret tool post 60 mainly includes a body portion 61, a turret 62 including turret surfaces (attachment surfaces) 62a, and a drive mechanism not shown in the drawings. The body portion 61 and the turret 62 are aligned with each other in the Z-axis direction.

The detailed configuration of the first turret tool post 20 is described below. Since the second turret tool post 60 can be configured in the same manner as the first turret tool post 20, a detailed description thereof is omitted.

As shown in FIG. 2, the turret 22 has a prismatic outer shape when viewed from the front along the Z-axis direction. The turret 22 is attached to the body portion 21 to be pivotable by rotating a turret pivot shaft 25 about the Z-axis with the axis of the prism aligned with the Z-axis.

The turret 22 is provided with a plurality (twelve in FIG. 2) of flat turret surfaces 22a on the peripheral surface around the axis of the prism. A tool holder 90 is attached to each turret surface 22a, and a tool 91, such as a turning tool for cutting as shown by the two-dotted chain line, is mounted on the tool holder 90. A rotary tool or tool unit, such as a drill or end mill, other than cutting tools may be attached to the turret surface 22a. In the present embodiment, the guide bush device 70 is attached to one of the turret surfaces 22a. The guide bush device 70 may be attached to any one of the plurality of turret surfaces 22a.

The first turret tool post 20 moves in the X-axis and Z-axis directions, and the turret 22 pivots about the turret pivot shaft 25 (see FIG. 3). With this movement, the first turret tool post 20 brings the tool holder 90 or tool, which is attached to the turret surface 22a, into contact with the workpiece W, which rotates while being held by the front main spindle 10. As a result, the tool machines the workpiece W.

The first turret tool post 20 positions the guide bush device 70, which is attached to the turret surface 22a, at a selected pivot position by the pivoting movement of the turret 22 about the turret pivot shaft 25 (see FIG. 3). The guide bush device 70 allows insertion of the workpiece W therein, the workpiece W being held and rotated by the front main spindle 10, and guides the workpiece W while rotating synchronously with the front main spindle 10. The workpiece W, which is held by the front main spindle 10 and the guide bush device 70, is machined by a tool of the second turret tool post 60.

As shown in FIG. 3, a hollow fixed shaft 23 is fixed along the Z-axis direction in a hollow portion inside the body portion 21. The fixed shaft 23 rotatably supports a hollow tool rotation drive shaft 24, which is inserted therein, via bearings. The turret pivot shaft 25 is rotatably disposed around the outer periphery of the fixed shaft 23. A pipe 26 is disposed on an inner side of the tool rotation drive shaft 24. The pipe 26 is fixed to the body portion 21.

Each of the tool rotation drive shaft 24 and the turret pivot shaft 25 is rotatable about the Z-axis. The tool rotation drive shaft 24 and the turret pivot shaft 25 rotate separately and independently.

The tool rotation drive shaft 24 rotates about the Z-axis, thereby rotating a rotary tool, such as a drill, which is attached to the turret 22, about the axis of the rotary tool. In the present embodiment, the tool rotation drive shaft 24 rotates a guide bush sleeve 72 and a guide bush 73 of the guide bush device 70, which is attached to the turret 22, about the Z-axis.

The turret pivot shaft 25 rotates about the Z-axis, thereby pivoting the turret 22 about the Z-axis with respect to the body portion 21.

A first pulley 27a is attached to one end (rear side) of the tool rotation drive shaft 24. The body portion 21 includes the tool rotation motor 28. A second pulley 27b is attached to a motor shaft 28a of the tool rotation motor 28. The first pulley 27a and the second pulley 27b are connected via a belt 29. The rotational drive force of the tool rotation motor 28 is transmitted to the tool rotation drive shaft 24 via the first pulley 27a, the belt 29, and the second pulley 27b. A first bevel gear 30 is attached to the other end (front side) of the tool rotation drive shaft 24.

A turret pivot gear 31 is integrally attached to one end of the turret pivot shaft 25. The drive force is transmitted to the turret pivot gear 31 from a turret pivot motor (not shown in the drawings). The turret 22 is integrally fixed to the other end of the turret pivot shaft 25.

A sliding shaft 32 is provided on the outer side of the turret pivot shaft 25 via bearings to be slidable in the Z-axis direction. The sliding shaft 32 is formed, at one end, as a piston 34 that is inserted into a cylinder chamber 33 formed in the body portion 21. A first coupling element 35a, which forms a part of a three-member coupling mechanism 35, is integrally fixed to one end portion of the sliding shaft 32. Second and third coupling elements 35b, 35c, which face the first coupling element 35a, are respectively and integrally fixed to the side of the body portion 21 and the side of the turret pivot shaft 25. The three-member coupling mechanism 35 consists of the first, second and third coupling elements 35a, 35b, 35c.

The first coupling element 35a engages with the second and third coupling elements 35b, 35c by activating the piston 34 to move the sliding shaft 32 toward the turret 22 (forward). When the third coupling element 35c on the side of the turret pivot shaft 25 engages with the second coupling element 35b on the side of the body portion 21 via the first coupling element 35a, the pivoting movement of the turret pivot shaft 25 is restricted. When the sliding shaft 32 is driven to slide so as to release the engagement between the first coupling element 35a and the second and third coupling elements 35b, 35c, the second coupling element 35b and the third coupling element 35c are separated, thereby allowing the pivoting movement of the turret pivot shaft 25.

When the turret pivot shaft 25 is allowed to pivot and is then driven to pivot, the turret 22 pivots. The pivoting movement of the turret pivot shaft 25 is restricted at a predetermined pivot angular position, thereby performing an indexing pivot of the turret 22. As a result of the indexing pivot of the turret 22, a predetermined turret surface 22a of the turret 22 is selected. Consequently, a predetermined tool holder 90 or the guide bush device 70 is selected.

A support portion 36 positioned in a hollow interior of the turret 22 is integrally fixed to one end of the fixed shaft 23. The support portion 36 is integrally fixed to the body portion 21 through the fixed shaft 23. A tool rotation transmission shaft 37 is rotatably supported by the support portion 36. A second bevel gear 38 is attached to one end of the tool rotation transmission shaft 37. The second bevel gear 38 is in mesh with the first bevel gear 30. The first bevel gear 30 and the second bevel gear 38 transmit the drive force from the tool rotation drive shaft 24 to the tool rotation transmission shaft 37.

A tool pivot motor unit 40 is fixed to the support portion 36 via a bracket 39. The tool pivot motor unit 40 includes a tool pivot motor 41, a second motor shaft 41a for transmitting the drive force of the tool pivot motor 41, and the like. When a tool unit capable of machining by the pivoting movement of the rotary tool is installed on the turret surface 22a, for example, the second motor shaft 41a transmits the pivot drive force from the tool pivot motor 41 to the rotary tool. This allows the rotary tool to pivot at a predetermined angle with its axis perpendicular to the turret surface 22a, thereby enabling machining at a desired angle. An electrical wiring and the like connected to the tool pivot motor 41 is drawn out through the hollow pipe 26 and connected to the controller 1.

Each turret surface 22a is formed with a fixing portion 22b having a hollow cylindrical shape. The tool holder 90, to which the tool 91 is attached, or the guide bush device 70 is removably fixed to the fixing portion 22b.

The tool rotation transmission shaft 37 includes a groove portion 42 on the other end (i.e., side opposite to the second bevel gear 38). A tenon-shaped projection portion 82, described later, engages with the groove portion 42 when the guide bush device 70 or the tool holder 90 is selected by the indexing pivot of the turret 22. The groove portion 42 and the tenon-shaped projection portion 82 constitute a drive force transmission portion that transmits the rotational drive force of the tool rotation motor 28 to a rotational drive force transmission mechanism 76 of the guide bush device 70, described later, or to a rotational drive force transmission mechanism (not shown in the drawings) of the tool holder 90.

As shown in FIGS. 3 and 4, the guide bush device 70 is a rotary guide bush that mainly includes a guide bush holder 71, the guide bush sleeve 72, the guide bush 73, first bearings (angular contact ball bearings) 74, a first spur gear 75, and the rotational drive force transmission mechanism 76.

The bar-shaped workpiece W to be machined by the front main spindle 10 and the like is inserted into and supported by the guide bush 73, and is guided by the guide bush device 70 toward the second turret tool post 60.

The guide bush holder 71 is removably fixed to the fixing portion 22b of the turret 22. The guide bush sleeve 72 is inserted inside the guide bush holder 71. The first bearings 74 are disposed between the guide bush holder 71 and the guide bush sleeve 72.

The guide bush sleeve 72 is rotatable about the Z-axis with respect to the guide bush holder 71 via the first bearings 74. The first spur gear 75 is provided on the outer periphery on a rear side of the guide bush sleeve 72. The first spur gear 75 and the guide bush sleeve 72 are integrally rotatable about the Z-axis through keys (not shown in the drawings) that are respectively provided thereon and are engaged with each other. The first spur gear 75 is fixed in position in the Z-axis direction by a fixing tool (not shown in the drawings).

The guide bush 73 is inserted inside the guide bush sleeve 72. A slit (not shown in the drawings), which is a cut extending in the Z-axis direction, is provided on the front side of the guide bush 73. The guide bush 73 includes a first taper 73a on an outer peripheral surface of the front side. The outer diameter of the first taper 73a decreases as it goes rearward.

While the guide bush 73 is integrally rotatable about the Z-axis with respect to the guide bush sleeve 72, the guide bush 73 can be displaced in the Z-axis direction with respect to the guide bush sleeve 72.

The guide bush sleeve 72 has a second taper 72a corresponding to the first taper 73a on an inner peripheral surface of the front side. The inner diameter of the second taper 72a decreases as it goes rearward. When the guide bush 73 is displaced rearward along the Z-axis direction with respect to the guide bush sleeve 72, the first taper 73a is pressed against the second taper 72a, and the diameter of its front end portion is adjusted by the slit in a direction in which the diameter decreases. As a result, the inner diameter (opening) on the front side of the guide bush 73 changes by using a guide bush opening adjustment mechanism (not shown in the drawings).

When the first spur gear 75 is rotationally driven about the Z-axis by the rotational drive force transmission mechanism 76, the guide bush sleeve 72 and the guide bush 73 integrally rotate together with the first spur gear 75.

The rotational drive force transmission mechanism 76 mainly includes second bearings 77, a first rotational drive force transmission shaft 78, third bearings 79, and a second rotational drive force transmission shaft 80. The first rotational drive force transmission shaft 78 is rotatably inserted and supported in the guide bush holder 71 via the second bearings 77. The first rotational drive force transmission shaft 78 is provided at its one end with a third bevel gear 81.

The first rotational drive force transmission shaft 78 is provided, at the other end portion, with the tenon-shaped projection portion 82. When the guide bush device 70 is selected by the pivoting movement of the turret 22, the tenon-shaped projection portion 82 is configured to removably engage with (fit into) the groove portion 42 of the tool rotation transmission shaft 37. When the tenon-shaped projection portion 82 engages with the groove portion 42, the rotational drive force transmitted to the tool rotation transmission shaft 37 can be transmitted to the first rotational drive force transmission shaft 78.

The second rotational drive force transmission shaft 80 is rotatably inserted and supported along the Z-axis direction in the guide bush holder 71 via the third bearings 79. The second rotational drive force transmission shaft 80 is provided, on its one end (rear side), with a fourth bevel gear 83. The meshing between the fourth bevel gear 83 and the third bevel gear 81 establishes a connection between the first rotational drive force transmission shaft 78 and the second rotational drive force transmission shaft 80. The second rotational drive force transmission shaft 80 is provided with a second spur gear 84 on the side (rear side) where the fourth bevel gear 83 is provided. The second spur gear 84 is in mesh with the first spur gear 75.

In the rotational drive force transmission mechanism 76, the tenon-shaped projection portion 82 of the first rotational drive force transmission shaft 78 engages with the groove portion 42, thereby transmitting the rotational drive force from the tool rotation transmission shaft 37 to the first rotational drive force transmission shaft 78. The rotational drive force is transmitted from the first rotational drive force transmission shaft 78 to the first spur gear 75 via the third bevel gear 81, the fourth bevel gear 83, the second rotational drive force transmission shaft 80, and the second spur gear 84. As a result, the guide bush sleeve 72 and the guide bush 73 rotate integrally with the first spur gear 75.

The tool holder 90 is provided with a pivot drive force transmission mechanism (not shown in the drawings) inside the turret 22, and a rotational drive force transmission mechanism. The pivot drive force transmission mechanism is connected to the second motor shaft 41a during indexing of the turret 22. The pivot drive force transmission mechanism pivots the tool holder 90 about the axis of the second motor shaft 41a by transmitting the rotational drive force from the tool pivot motor 41 via the second motor shaft 41a. Similar to the guide bush device 70, the rotational drive force transmission mechanism is connected to the tool rotation transmission shaft 37 by an engagement between a tenon-shaped projection portion (not shown in the drawings) and the groove portion 42. The rotational drive force transmission mechanism transmits the rotational drive force from the tool rotation transmission shaft 37 to rotate the tool 91.

According to the automatic lathe 100 configured as described above, it is possible to attach the guide bush device 70 to one of the turret surfaces 22a of the first turret tool post 20, and to attach the tool holders 90 to the other turret surfaces 22a. When the workpiece W held by the front main spindle 10 is machined by a tool using the first turret tool post 20, the turret 22 is pivoted to bring the desired tool holder 90 to a selected pivot position. It is possible to machine the workpiece W, which rotates while being held by the front main spindle 10, using the tool 91 attached to the selected tool holder 90.

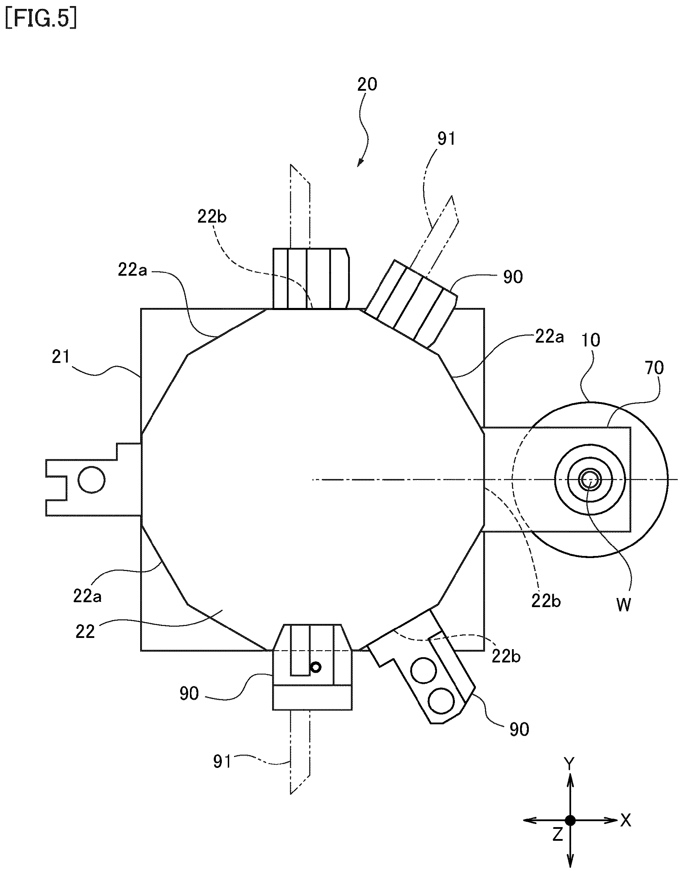

On the other hand, for example, when the workpiece W to be machined is relatively small in outer diameter or is susceptible to load during machining, it is preferable to use the guide bush device 70. In this case, as shown in FIG. 5, the turret 22 pivots so as to dispose the guide bush device 70 at the selected pivot position. Under the control of the controller 1, the first turret tool post 20 moves in the X-axis and Z-axis directions to be positioned with respect to the front main spindle 10. This positioning aligns the axis of the guide bush 73 with the axis of the front main spindle 10 and locates the guide bush 73 at a position where it can hold the workpiece W held by the front main spindle 10. In the second turret tool post 60, the desired tool holder 90 is indexed and positioned, by the movement in the X-axis and Z-axis directions, at a position where the workpiece W guided by the guide bush device 70 can be machined.

Under the control of the controller 1, the tool rotation motor 28 rotates synchronously with the rotation of the front main spindle 10. The rotational drive force of the tool rotation motor 28 is transmitted to the rotational drive force transmission mechanism 76 via the tool rotation drive shaft 24 and the tool rotation transmission shaft 37. Thus, the guide bush sleeve 72 and the guide bush 73 rotate integrally. While the guide bush 73 rotates synchronously with the front main spindle 10, the guide bush 73 guides the workpiece W rotated and held by the front main spindle 10. The workpiece W is machined by the tool of the second turret tool post 60.

Since the workpiece W is supported by the guide bush device 70, it is possible to properly suppress deformation, such as distortion or warping, of the workpiece W due to cutting load and the like. In particular, for example, when the workpiece W has a small outer diameter or is long in one direction relative to the outer diameter (shorter side), it is possible to properly suppress the deformation, thereby enabling machining with higher precision. Moreover, since the guide bush device 70 of the present embodiment guides the workpiece W while rotating synchronously with the rotation of the front main spindle 10 or the rear main spindle 50, it is possible to more effectively suppress the occurrence of deformation and scratches of the workpiece W. Therefore, the automatic lathe 100 can improve the precision of machining the workpiece W.

The tool posts of the present embodiment include the body portions 21, 61, the turrets 22, 62 rotatably supported by the body portions 21, 61, and the turret tool posts (first turret tool post 20 and second turret tool post 60) including the drive mechanisms. The guide bush device 70 can be attached to the turret surfaces 22a, 62a of such turret tool posts. The drive mechanism for rotationally driving the tool can generate a driving force for rotating the guide bush sleeve 72 and the guide bush 73 of the guide bush device 70, so that there is no need to provide a separate drive mechanism. Therefore, the controller 1 can easily control the guide bush device 70, and production costs can be reduced.

The guide bush device 70 of the present embodiment can also be applied to a machine tool without a guide bush device. Accordingly, the machine tool can properly support the workpiece W with the front main spindle 10 and the guide bush device 70. This makes it possible to properly suppress deformation and the like, thereby machining the workpiece W with higher precision. The machine tool can perform machining both without the guide bush device 70 and with the guide bush device 70. This makes it possible to perform high-precision machining on workpieces W having different outer diameters.

The guide bush device 70 of the present embodiment is provided, inside the turret 22, with the pivot drive force transmission mechanism (not shown in the drawings) and the rotational drive force transmission mechanism. The pivot drive force transmission mechanism is connected to the second motor shaft 41a at the indexing of the turret 22. The pivot drive force transmission mechanism enables the rotary guide bush device 70 to pivot about the axis of the second motor shaft 41a, similar to the pivoting movement of the tool holder 90, by transmitting the rotational drive force of the tool pivot motor 41 via the second motor shaft 41a. Since the first turret tool post 20 is movable in the Z-axis direction, the first turret tool post 20 moves close to the rear main spindle 50, and the rotary guide bush device 70 pivots, thereby guiding the workpiece W held by the rear main spindle 50 while the rotary guide bush device 70 rotates synchronously with the rear main spindle 50. The workpiece W is machined by the tool of the second turret tool post 60.

The machine tools, to which the guide bush device 70 according to the present invention is applied, are not limited to automatic lathes. Although the guide bush device 70 according to the present invention is attached to the turret tool post, the tool post is not limited to a turret tool post. The tool post may be a so-called gang-type tool post in which tools, such as cutting tools, are fixed in parallel to a feed table. The guide bush device 70 of the present invention can be mounted on such a tool post.

As described above, the embodiment of the present invention has been explained in detail with reference to the drawings. However, this embodiment is merely an example of the present invention. The present invention is not limited to the above-described embodiment.

### [CROSS-REFERENCE TO RELATED APPLICATION]

The present application is based upon and claims the benefit of priority from Japanese Patent Application No. 2023-040007 filed with the Japan Patent Office on March 14, 2023, the entire disclosure of which is incorporated in its entirety in the present specification by reference.

## Claims

1. A guide bush device adapted to be mounted on a tool post of a machine tool,
wherein the machine tool comprises a main spindle for holding a workpiece and the tool post for machining the workpiece,
wherein the guide bush device is configured to be at least movable with respect to the main spindle in a direction along an axis of the main spindle and in a direction intersecting the axis,
wherein the guide bush device comprises a rotary guide bush, the rotary guide bush comprising:
a guide bush sleeve that is rotatably supported; and
a guide bush that is inserted in the guide bush sleeve,
wherein the rotary guide bush is controlled to rotate synchronously with rotation of the main spindle so as to guide the workpiece held by the main spindle while the rotary guide bush rotates.

2. The guide bush device according to claim 1, wherein the tool post is a turret tool post comprising
a body portion,
a turret that is pivotably supported by the body portion, and
a drive mechanism that rotationally drives tools attached to the turret,
wherein the turret comprises a peripheral surface around a pivot axis and an end surface perpendicular to the pivot axis, the peripheral surface being divided into a plurality of surfaces, the surfaces being attachment surfaces on which tools are mounted,
wherein the turret is configured to index each of the tools with respect to the main spindle at a pivot position selected by pivoting around the pivot axis,
wherein the guide bush device is configured to be detachably attached to one of the attachment surfaces and is rotationally driven by the drive mechanism.
